# EUROPÄISCHE PATENTSCHRIFT

(11) **EP 2 210 866 B1**
(45) Veröffentlichungstag und Bekanntmachung des Hinweises auf die Patenterteilung: **15.09.2021**
(21) Anmeldenummer: 09179498.2
(22) Anmeldetag: 16.12.2009
(51) Int. Cl.: C04B 28/14, F24D 3/14, C04B 14/00

(54) **Dünnschichtige Heizestrichkonstruktion auf Trenn- und Dämmschicht**
Thin-layer heat screed construction on partition and insulating layer
Construction de chape à couche fine sur une couche de séparation et isolante

(30) Priorität: 16.12.2008 EP 08171829
(43) Veröffentlichungstag der Anmeldung: 28.07.2010
(73) Patentinhaber: Knauf Gips KG, 97346 Iphofen (DE)
(72) Erfinder: Seifert, Andres, 97318 Kitzingen (DE); Umlauf, Richard, 78628 Rottweil (DE); Baumann, Michael, 97337 Dettelbach (DE)
(74) Vertreter: dompatent von Kreisler Selting Werner - Partnerschaft von Patent- und Rechtsanwälten mbB

(56) Entgegenhaltungen:
- EP-A1- 0 001 205
- EP-A1- 0 005 774
- EP-A1- 0 323 577
- EP-A2- 0 330 976
- EP-A2- 1 462 727
- WO-A1-2004/101464
- DE-A1- 2 618 621
- DE-A1- 2 705 146
- DE-A1- 2 817 446
- DE-A1- 3 730 144
- DE-A1- 10 032 670
- DE-A1- 19 518 097
- DE-A1-102006 004 828
- DE-U1- 29 806 128
- FR-A1- 2 358 621
- US-A- 4 878 332

## Beschreibung

Gegenstand der vorliegenden Erfindung ist eine Heizestrichkonstruktion mit geringer Schichtdicke, die ohne direkten Verbund zum Untergrund hergestellt werden kann.

Als Estrich bezeichnet man den Aufbau des Fußbodens eines Bauwerks oder Gebäudes, der den technisch erforderlichen Untergrund für den eigentlichen Bodenbelag liefert. Er befindet sich oberhalb der tragenden Geschossdecke bzw. der Bodenplatte und unterhalb des Bodenbelags.

Es sind grundsätzlich verschiedene Estricharten bekannt, insbesondere Zementestriche, Gussasphaltestriche, Kunstharzestriche und Anhydritestriche. Ein Heizestrich ist eine Estrichkonstruktion, die Elemente für eine Fußbodenheizung aufnimmt.

Ein normaler Heizestrich wird erstellt durch das Verlegen von Heizrohren, die in einen Estrich eingegossen werden. Die der Norm entsprechende Dicke des entsprechenden Heizestrichs beträgt 55 mm bis 65 mm.

Insbesondere bei der Modernisierung von Wohngebäuden stehen diese häufig nicht zur Verfügung.

Eine bekannte Alternative des Standes der Technik ist ein dünnschichtiges Fußbodenheizungssystem bestehend aus Foliennoppenelementen, in die ein Heizrohr verlegt wird. Die Foliennoppelemente werden mit dem Rohboden oder bestehendem Estrich verklebt und es wird anschließend mit einem Estrichmaterial übergossen. Die Foliennoppenelemente müssen dabei Aussparungen aufweisen, damit sich der frischgegossene Estrich mit dem vorhandenen Rohboden oder dem vorhandenen Estrich verbinden kann. Auf diese Weise ergibt sich eine gesamte Aufbauhöhe von mindestens 20 mm. Die entsprechende Konstruktion ist jedoch nur möglich, wenn eine Verbindung zwischen dem gegossenen Heizestrich und dem Untergrund hergestellt werden kann.

In Fällen, in denen dies nicht möglich ist, beispielsweise, weil ein Holzboden vorhanden ist oder Wärme- oder Trittschalldämmung vorgelegt werden soll, besteht die Möglichkeit, eine mit geschäumtem Polystyrol gefüllte Noppenträgerplatte zu verwenden, in die Heizleitungen eingelegt werden, die anschließend mit einem Estrichmörtel verfüllt werden. Hierbei ergibt sich jedoch eine Aufbauhöhe von 20 mm für die Noppenträgerplatte plus 37 mm für den Estrich, also insgesamt 57 mm. Bei der Verlegung von starren Bodenbelägen muss zudem noch eine Entkopplungsschicht auf dem neuen Estrich verlegt werden.

Es besteht daher weiterhin ein Bedarf nach Heizestrichkonstruktionen, die möglichst geringe Aufbauhöhen benötigen, aber ausgeführt werden können, ohne dass es einer Verbindung zwischen dem Untergrund und dem Heizestrich bedarf.

Gelöst wird die Aufgabe durch eine Heizestrichkonstruktion zur Verlegung auf einer Dämm- oder Trennschicht umfassend:
- Folienelemente zur Aufnahme von Heizrohren;
- Heizrohre;
- Calciumsulfatestrich;
wobei die Heizestrichkonstruktion ohne die Dämm- oder Trennschicht eine Aufbauhöhe von weniger als 35 mm aufweist, wobei die Dämmschicht ausgewählt wird aus expandiertem Polystyrol (EPS), Holzweichfasern, Mineralwolle, Gummi oder geschäumtem Polyurethan oder Phenolharz, Vakuumdämmstoffen oder Dämmstoffen auf Basis von Aerogelen und/oder die Trennschicht ausgewählt wird aus beschichtetem Spezialpapier, Folien oder dünnen Dämmstoffbahnen.

Erfindungsgemäß umfasst die Heizestrichkonstruktion Folienelemente zur Aufnahme von Heizrohren, dazu passende Heizrohre sowie einen Calciumsulfatestrich.

Erfindungsgemäß kann dabei eine Heizestrichkonstruktion erstellt werden, die direkt auf eine Dämm- oder Trennschicht verlegt wird und trotzdem nur eine Aufbauhöhe von weniger als 35 mm aufweist.

Als Unterlagen für die erfindungsgemäße Heizestrichkonstruktion eigenen sich zum einen Dämmschichten, beispielsweise auf Basis von expandiertem Polystyrol, Holzweichfaserplatten, Mineralwolldämmplatten oder Dämmplatten aus Gummi oder geschäumtem Polyurethan oder Phenolharz. Auch spezielle hochdämmende Dämmstoffe z.B. Vakuumdämmstoffe oder Dämmstoffe auf Basis von Aerogel sind einsetzbar.

Die Verlegung kann auch auf Trennschichten erfolgen. Geeignete Trennschichten sind beispielsweise beschichtetes Spezialpapier, Folien oder Dämmstoffbahnen, etc. Es kann aber auch auf einer Dämmschicht noch eine Trennschicht verlegt werden.

Im Heizestrich treten aufgrund von Temperaturdehnung und Reibungskräften Zugkräfte auf, die über den Estrichquerschnitt aufgenommen werden müssen. Je größer die Estrichdicke, desto mehr Zugkräfte kann der Estrich aufnehmen.

Überraschenderweise hat sich gezeigt, dass der Calciumsulfatestrich eine im Vergleich zu anderem Estrichmaterial geringere Wärmedehnung aufweist, wodurch geringere Zugkräfte entstehen.

Weiterhin wird der Estrich bei einer punktuellen Belastung, beispielsweise durch einen Schrankfuss oder eine Person verformt. Hierdurch entstehen Biegespannungen im Estrich.

Überraschenderweise hat sich gezeigt, dass, wenn die beanspruchten Dämm- oder Trennschichten eingesetzt werden, die Biegespannung so reduziert werden kann, dass in Kombination mit dem erfindungsgemäß eingesetzten Estrichmaterial die Zug- und Biegespannungen so gering sind, dass überraschenderweise eine geringere Estrichdicke genügt.

Bevorzugt wird das Folienelement zur Aufnahme der Heizrohre in Form von ungefüllten, offenen Noppenelementen bereitgestellt. Es wird vermutet, dass durch die von den Noppen gebildeten Strukturen Spannungen im Estrich in die Fläche verteilt werden können.

Bei der Herstellung wird zunächst die Dämm- und/oder Trennschicht auf einem vorhandenen, ebenen Rohboden verlegt. Hat der Boden keine hinreichende Ebenmäßigkeit, kann er zum Beispiel mit einer Ausgleichsmasse eingeebnet werden. Anschließend erfolgt gegebenenfalls das Aufbringen einer Dämmschicht, diese kann sowohl wärme- als auch schalldämmende Eigenschaften haben. Zur Wand hin wird - wie bei der normalen Estrichverlegung - ein Randdämmstreifen verlegt. Auf die Dämmschicht wird anschließend eine Trennschicht verlegt, um das Dämmmaterial abzugrenzen. Hierauf werden dann übliche Folienelemente für Heizestriche verlegt, in die je nach Bedarf und Berechnung des Heizbedarfes Heizrohre verlegt werden. Anschließend werden die Folienelemente so mit einem Calciumsulfatestrich überfüllt, dass die Rohre 20 mm überdeckt sind. Dabei ist es sinnvoll, den Estrich dünnflüssig einzustellen, um ein gutes Eindringen in das Noppenelement zu erreichen.

Die Zusammensetzung des Calciumsulfatestrichs ist:
- 50 bis 80% Zuschlag aus Kalkstein, Quarzsand oder Naturanhydrit mit Körnung zwischen 0 bis 0,5 mm und 0 bis 2,5 mm;
- 20 bis 50% CaSO₄-Binder sowie
- gegebenenfalls Zusatzmittel wie z.B. Fließmittel und Abbinderegler.

Aufgrund des Abbindeverhaltens eines Calciumsulfatestrichs ist der Estrich nach ca. 5 Stunden begehbar.

In einer Ausführungsform wird das Folienelement auf die Dämm- oder Trennschicht aufgeklebt. Hierbei hat sich eine selbstklebende Beschichtung auf dem Folienelement bewährt.

In einer bevorzugten Ausführungsform werden die vorhandenen Heizelemente benutzt, um den Heizestrich schneller auszutrocknen. Hierzu kann beispielsweise nach etwa 48 Stunden mit dem Aufheizen begonnen werden, wobei die Vorlauftemperatur 45°C möglichst nicht überschreiten sollte. Es kann sinnvoll sein, zunächst am ersten Tag der Trocknung die Vorlauftemperatur unter 30°C zu halten. 7 Tage nach dem Verlegen ist der Estrich typischerweise belegreif. Dies wird am einfachsten durch Messung der Restfeuchte geprüft, diese sollte unter 0,3% Restfeuchte liegen.

Erst zu diesem Zeitpunkt sollte die Beheizung des Estrichs beendet werden.

Soweit sich Unregelmäßigkeiten in der Ebenheit der Oberfläche ergeben haben, können diese übergespachtelt werden.

Anschließend kann ein Bodenbelag verlegt werden, beispielsweise mit Textilien, Belegung mit schwimmenden Belägen, Fliesen und Platten oder Parkett, wobei bevorzugt bei keramischen Fliesen die Maße 60x60 cm und bei Naturstein die Maße 40x40 cm nicht überschritten werden.

## Patentansprüche

1. Heizestrichkonstruktion zur Verlegung auf einer Dämmschicht umfassend:
- Folienelemente zur Aufnahme von Heizrohren;
- Heizrohre;
- Calciumsulfatestrich;
wobei die Heizestrichkonstruktion ohne die Dämmschicht eine Aufbauhöhe von weniger als 35 mm aufweist,
wobei die Folienelemente ungefüllte, offene Noppenelemente sind,
wobei die Dämmschicht ausgewählt wird aus expandiertem Polystyrol (EPS), Holzweichfasern, Mineralwolle, Gummi oder geschäumtem Polyurethan oder Phenolharz, Vakuumdämmstoffen oder Dämmstoffen auf Basis von Aerogelen
mit folgender Zusammensetzung des Calciumsulfatestrichs:
- 50 bis 80% Zuschlag aus Kalkstein, Quarzsand oder Naturanhydrit mit Körnung zwischen 0 bis 0,5 mm und 0 bis 2,5 mm;
- 20 bis 50% CaSO₄-Binder
- Zusatzmittel wie Fließmittel und Abbinderegler.

2. Heizestrichkonstruktion nach Anspruch 1, **dadurch gekennzeichnet, dass** das Folienelement mit der Dämmschicht klebend verbunden ist.

3. Verfahren zur Verlegung eines Heizestrichs nach einem der Ansprüche 1 bis 2 umfassend die Schritte:
- Verlegung einer Dämmschicht,
- Verlegung von Folienelementen zur Aufnahme von Heizrohren,
- Verlegung von Heizrohren in den Folienelementen,
- Aufbringung eines Calciumsulfatestrichs,
wobei die Heizestrichkonstruktion ohne die Dämmschicht eine Aufbauhöhe von weniger als 35 mm aufweist und
wobei die Folienelemente ungefüllte, offene Noppenelemente sind,
wobei die Dämmschicht ausgewählt wird aus expandiertem Polystyrol (EPS), Holzweichfasern, Mineralwolle, Gummi oder geschäumtem Polyurethan oder Phenolharz, Vakuumdämmstoffen oder Dämmstoffen auf Basis von Aerogelen
mit folgender Zusammensetzung des Calciumsulfatestrichs:
- 50 bis 80% Zuschlag aus Kalkstein, Quarzsand oder Naturanhydrit mit Körnung zwischen 0 bis 0,5 mm und 0 bis 2,5 mm;
- 20 bis 50% CaSO₄-Binder
- Zusatzmittel wie Fließmittel und Abbinderegler.

## Claims

1. A heated screed construction for laying on an insulation layer, comprising:
- sheet elements for receiving heating pipes;
- heating pipes;
- calcium sulfate screed;
wherein said heated screed construction without said insulation layer has an installation height of less than 35 mm;
wherein said sheet elements are unfilled, open nub elements;
wherein said insulation layer is selected from expanded polystyrene (EPS), soft wood fibers, mineral wool, rubber, or foamed polyurethane or phenol resin, vacuum insulation materials, or aerogel-based insulation materials;
with the following composition of the calcium sulfate screed:
- from 50 to 80% aggregates made of limestone, silica sand or natural anhydrite having grain sizes of between from 0 to 0.5 mm and from 0 to 2.5 mm;
- from 20 to 50% CaSO₄ binder;
- additives, such as flow improvers and setting regulation agents.

2. The heated screed construction according to claim 1, **characterized in that** said sheet element is bonded to said insulation layer by adhesive bonding.

3. A process for laying a heated screed according to either of claims 1 or 2, comprising the steps of:
- laying an insulation layer;
- laying sheet elements for receiving heating pipes;
- laying heating pipes into said sheet elements;
- applying a calcium sulfate screed;
wherein said heated screed construction without said insulation layer has an installation height of less than 35 mm; and
wherein said sheet elements are unfilled, open nub elements;
wherein said insulation layer is selected from expanded polystyrene (EPS), soft wood fibers, mineral wool, rubber, or foamed polyurethane or phenol resin, vacuum insulation materials, or aerogel-based insulation materials;
with the following composition of the calcium sulfate screed:
- from 50 to 80% aggregates made of limestone, silica sand or natural anhydrite having grain sizes of between from 0 to 0.5 mm and from 0 to 2.5 mm;
- from 20 to 50% CaSO₄ binder;
- additives, such as flow improvers and setting regulation agents.

## Revendications

1. Construction de chape chauffante destinée à la pose sur une couche isolante comprenant:
- éléments de feuille destinés à accueillir des tubes chauffants ;
- tubes chauffants ;
- chape au sulfate de calcium ;
dans laquelle la construction de chape chauffante sans la couche isolante comporte une hauteur de structure inférieure à 35 mm,
dans laquelle les éléments de feuille sont des plaques à plots ouvertes et non remplies,
dans laquelle la couche isolante est sélectionnée parmi le polystyrène expansé (EPS), les fibres de bois douces, la laine minérale, le caoutchouc ou la mousse de polyuréthane ou la résine phénolique, les isolants sous vide ou les isolants à base d'aérogels avec la composition suivante de la chape au sulfate de calcium :
- 50 à 80 % de charge additionnelle de calcaire, de sable quartzeux ou d'anhydrite naturelle avec une granulation entre 0 à 0,5 mm et 0 à 2,5 mm ;
- 20 à 50 % de liant CaSO₄
- adjuvants tels qu'agent rhéologique et régulateur de prise.

2. Construction de chape chauffante selon la revendication 1, **caractérisée en ce que** l'élément de feuille est lié par adhérence à la couche isolante.

3. Procédé de pose d'une chape chauffante selon l'une des revendications 1 à 2, comprenant les étapes :
- pose d'une couche isolante,
- pose d'éléments de feuille destinés à accueillir des tubes chauffants,
- pose de tubes chauffants dans les éléments de feuille,
- application d'une chape au sulfate de calcium,
dans lequel la construction de chape chauffante sans la couche isolante comporte une hauteur de structure inférieure à 35 mm et
dans lequel les éléments de feuille sont des plaques à plots ouvertes et non remplies,
dans lequel la couche isolante est sélectionnée parmi le polystyrène expansé (EPS), les fibres de bois douces, la laine minérale, le caoutchouc ou la mousse de polyuréthane ou la résine phénolique, les isolants sous vide ou les isolants à base d'aérogels avec la composition suivante de la chape au sulfate de calcium :
- 50 à 80 % de charge additionnelle de calcaire, de sable quartzeux ou d'anhydrite naturelle avec une granulation entre 0 à 0,5 mm et 0 à 2,5 mm ;
- 20 à 50 % de liant CaSO₄
- adjuvants tels qu'agent rhéologique et régulateur de prise.
